# EUROPEAN PATENT SPECIFICATION

(11) **EP 2 825 369 B1**
(45) Date of publication and mention of the grant of the patent: **21.10.2015**
(21) Application number: 13717807.5
(22) Date of filing: 12.03.2013
(51) Int. Cl.: B29C 65/34, B29C 65/82, F16L 47/03, G01M 3/28

(54) **IMPROVED ELECTROFUSION FITTINGS AND METHODS**
VERBESSERTE ELEKTROSCHWEISSMUFFEN UND VERFAHREN DAFÜR
RACCORDS PAR ÉLECTROFUSION AMÉLIORÉS ET PROCÉDÉS ASSOCIÉS

(30) Priority: 12.03.2012 GB 201204294; 12.03.2012 GB 201204300; 05.10.2012 GB 201217883
(43) Date of publication of application: 21.01.2015
(73) Proprietor: Pioneer Lining Technology Limited, Clydebank Business Park Clydebank G81 2LE (GB)
(72) Inventor: BARNES, Stephen, Glasgow Central Scotland G81 1BF (GB)
(74) Representative: Walker, Stephen
(86) International application number: PCT/GB2013/050606
(87) International publication number: WO 2013/136062

(56) References cited:
- WO-A1-95/12086
- WO-A1-03/076840
- WO-A1-2012/019283
- WO-A1-2012/059624
- DE-A1-102011 103 855
- DE-U1- 20 213 974
- DE-U1-202011 101 425
- US-A1- 2002 121 777
- US-B1- 6 237 640

## Description

The present invention relates to the field of electrofusion fittings such as employed to join sections of lined pipe. More specifically, the present invention concerns improvements to electrofusion fittings that enable the integrity of a weld between an electrofusion fitting and a pipe lining to be tested in the field, and corresponding methods of installation and testing.

### Background to the invention

It is known that the life and performance of new and existing pipelines can be extended and optimised by lining lengths of metal pipe with polymer liners. For example, the Applicant's Swagelining® pipe lining service allows existing pipelines to be remediated and new pipelines to be provided with corrosion resistance by installing a polymer liner that remains in tight contact with the inside of a host pipe.

To join adjacent lined pipe lengths, it is known to provide an electrofusion fitting to connect the inner pipe linings prior to welding the metal pipe lengths together. The Applicant's earlier International Application Publication Number WO 2010/041016, Figure 1 of which is reproduced in part in Figure 1 of the present application, discloses an electrofusion fitting 101 and a method of forming a pipe joint between two lined metal pipe lengths 103a,103b incorporating such a fitting 101. The electrofusion fitting 101 is a sleeve largely comprised of a thermoplastic material and includes heating coils 107a,107b disposed at either end of the fitting 101. In use, the lining 105a is stripped back and the electrofusion fitting 101 inserted into the end of metal pipe length 103a. The heating coils 107a are then provided with electrical power which causes the fitting 101 and the lining 105a in the vicinity of the coils to melt and fuse together. The process is repeated to fuse the fitting 101 to the lining 105b of the other metal pipe length 103b, after which the metal pipe lengths themselves 103a,103b are welded together at 109.

While the effect is such that a very effective weld is formed between the fitting 101 and the pipe linings 107a,107b, there is to date no suitable way to test the integrity of the weld in the field. If the weld is incomplete it is possible that fluid from within the pipe lining could leak through the weld and come into contact with the metal pipe causing corrosion and potentially ultimate failure, which defeats the purpose of having the metal pipe lined in the first place.

WO2012/019283 in the name of Powercore International Ltd. discloses an internal ring coupler for coupling plastic pipes using thermoplastic welding rod bands which fuse the coupler to the interior of abutted plastic pipes by application of an electrical current. The welding rod bands provide a pressure test cavity which enables pressure testing to be performed on the welds; however access is only via an access opening or valve on an internal surface of the coupler. This arrangement therefore requires access to the inner bore of the respective coupler, which would be difficult when joining lengths of lined pipe and would also be incompatible with many common welding techniques.

Accordingly, it is an object of at least one aspect of the present invention to provide an electrofusion fitting that enables the integrity of such a weld to be tested in the field. Embodiments of aspects of the present invention are intended to realise this object and to obviate or mitigate one or more further disadvantages of existing electrofusion fittings. Further aims and objects of the invention will become apparent from reading the following description.

### Summary of the invention

According to a first aspect of the invention, there is provided an electrofusion fitting for joining sections of lined pipe, the electrofusion fitting comprising one or more heating elements disposed on a surface of the electrofusion fitting and configured to create, in use, at least one weld between the electrofusion fitting and a pipe lining, and a channel extending at least partially through the electrofusion fitting to provide fluid access to a test region between the electrofusion fitting and the pipe lining to leak test the at least one weld, wherein the channel extends between an aperture in a surface of the electrofusion fitting and the test region, and characterised in that the aperture is longitudinally spaced from the test region and the channel extends substantially longitudinally through the electrofusion fitting.

The above invention provides a non-destructive way of testing the integrity and/or effectiveness of the electrofusion weld between an electrofusion fitting and a pipe lining. By providing fluid access to a test region, a leak test (which may be a pressure test) can be performed in the field and/or as part of an integrated lining method or system.

Preferably, the one or more heating elements are configured to produce one or more circumferential or annular welds between the electrofusion fitting. Preferably, the test region is disposed between two circumferential or annular welds. Preferably, the test region is a substantially annular space between the electrofusion fitting and the pipe lining.

Preferably, the aperture is formed on an outer surface of the electrofusion fitting. Preferably, such an aperture is located so as to be proximal the end of a pipe into which the electrofusion is configured for insertion. Optionally, the aperture is configured to receive a conduit for the supply of leak test or pressure test fluid.

Optionally, the aperture is configured to receive a probe via a hole drilled through a closed bevel between the lined pipe sections.

Optionally, the aperture is configured to receive a sealing plug. Optionally, the aperture is located within a recess sized to receive the sealing plug. Alternatively, the aperture and/or channel can be filled with a filler material.

Optionally, the electrofusion fitting further comprises one or more electrical contacts disposed on an inner surface of the electrofusion fitting and connected to the one or more heating elements through the electrofusion fitting.

Alternatively, the electrofusion fitting further comprises one or more electrical contacts disposed on an outer surface of the electrofusion fitting and connected to the one or more heating elements, the one or more electrical contacts configured to receive a probe for the supply of electrical power to the heating elements via one or more holes drilled through a closed bevel between the lined pipe sections.

Optionally, the channel is at least partially drilled through the electrofusion fitting. Alternatively, or additionally, a suitable tube or pipe is inserted into the electrofusion fitting during manufacture by a casting or injection moulding process.

Preferably, the one or more heating elements comprises at least one pair of heating coils disposed towards an end of the electrofusion fitting. Preferably, the electrofusion fitting comprises at least two pairs of heating coils disposed at either end of the electrofusion fitting defining at least one test region at each end of the electrofusion fitting.

Preferably, the electrofusion fitting comprises at least two channels extending through the electrofusion fitting to provide fluid access to corresponding at least two test regions. Preferably, both of two channels extending through the electrofusion fitting extend substantially longitudinally through the electrofusion fitting. Alternatively, one of the channels extends substantially radially through the electrofusion fitting.

Optionally, the at least one pair of heating coils comprises two longitudinally separated but electrically connected portions of a continuous coil. Alternatively, the at least one pair of heating coils comprises two electrically separate heating coils.

Preferably, the electrofusion fitting comprises a thermoplastic material. Most preferably, the electrofusion fitting comprises a cylindrical sleeve of thermoplastic material.

Preferably, the electrofusion fitting is configured for insertion into the end of a lined pipe section. Preferably, the electrofusion fitting is configured to be received in a recess in the end of the pipe lining. Preferably, the electrofusion fitting is configured to be received in a recess formed in an inner surface of the pipe lining. Alternatively, the electrofusion fitting is configured to be received in a recess formed in an outer surface of the pipe lining. Further alternatively, the electrofusion fitting is configured to abut the end of the pipe lining.

Accordingly, the heating elements are preferably arranged on an outer surface of the electrofusion fitting. Alternatively, the heating elements are arranged on an inner surface of the electrofusion fitting. Further alternatively, the heating elements are arranged on an abutting end of the electrofusion fitting.

Optionally, the electrofusion fitting is formed by an injection moulding process.

According to a second aspect of the invention there is provided a method of testing a weld between an electrofusion fitting and a pipe lining, comprising creating at least one weld between the electrofusion fitting and the pipe lining, and providing fluid through a channel in the electrofusion fitting to a test region between the electrofusion fitting and the pipe lining to leak test the at least one weld, wherein the channel extends between an aperture in a surface of the electrofusion fitting and the test region, and characterised in that the aperture is longitudinally spaced from the test region and the channel extends substantially longitudinally through the electrofusion fitting.

Most preferably, the method comprises creating two annular welds between the electrofusion fitting and the pipe lining, and wherein the test region is bounded by the annular welds.

Preferably, the method comprises creating a recess in the pipe lining to receive the electrofusion fitting. The recess may be created on an inner surface of the pipe lining, or on an outer surface of the pipe lining.

Preferably, the method comprises cooling the electrofusion fitting and the pipe lining after creating the at least one weld and prior to leak testing the at least one weld.

Optionally, the method comprises drilling one or more holes in a closed bevel formed between corresponding lined pipe sections. Preferably, the method comprises providing fluid to the test region via the one or more holes. Alternatively, or additionally, the method comprises providing electrical power to one or more heating coils of the electrofusion fitting via the one or more holes to create the at least one weld. To this end, the electrofusion fitting may be provided with electrical contacts on an outer surface.

Embodiments of the second aspect of the invention may comprise features corresponding to the preferred or optional features of the first aspect of the invention or vice versa.

### Brief description of the drawings

Aspects and advantages of the present invention will become apparent upon reading the following detailed description and upon reference to the following drawings (like reference numerals referring to like features) in which:

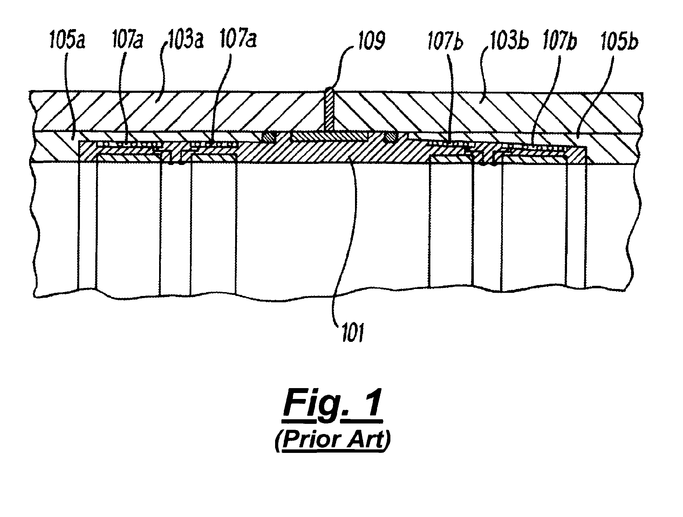

Figure 1 is a partial reproduction of Figure 1 of the Applicant's earlier International Application Publication Number WO 2010/041016, showing a schematic sectional view of an electrofusion fitting according to the prior art;
Figure 2 is a schematic sectional view of an electrofusion fitting according to an embodiment of an aspect of the present invention;
Figure 3 is a schematic sectional view of an alternative electrofusion fitting;
Figure 4 is a schematic sectional view of an electrofusion fitting according to an alternative embodiment of an aspect of the present invention;
Figure 5 is a schematic sectional view of an electrofusion fitting according to another alternative embodiment of an aspect of the present invention;
Figure 6 is a schematic sectional view of an electrofusion fitting according to a further alternative embodiment of an aspect of the present invention;
Figure 7 is a schematic sectional view of an electrofusion fitting according to a yet further alternative embodiment of an aspect of the present invention;
Figure 8 is a schematic sectional view of a pipe lining;
Figure 9 is a schematic sectional view of a plug;
Figure 10 is a schematic cross sectional view of adjacent pipe ends configured for automatic welding;
Figure 11 is (a) a schematic cross sectional view, and (b) a plan view, of adjacent pipe ends configured for automatic welding, fitted up and drilled through according to an embodiment of the present invention; and
Figure 12 is a schematic cross sectional view of adjacent pipe ends fitted up and drilled through as shown in Figure 11, and a probe for the delivery of electricity and/or fluid to an electrofusion fitting through the closed bevel, according to an embodiment of the present invention.

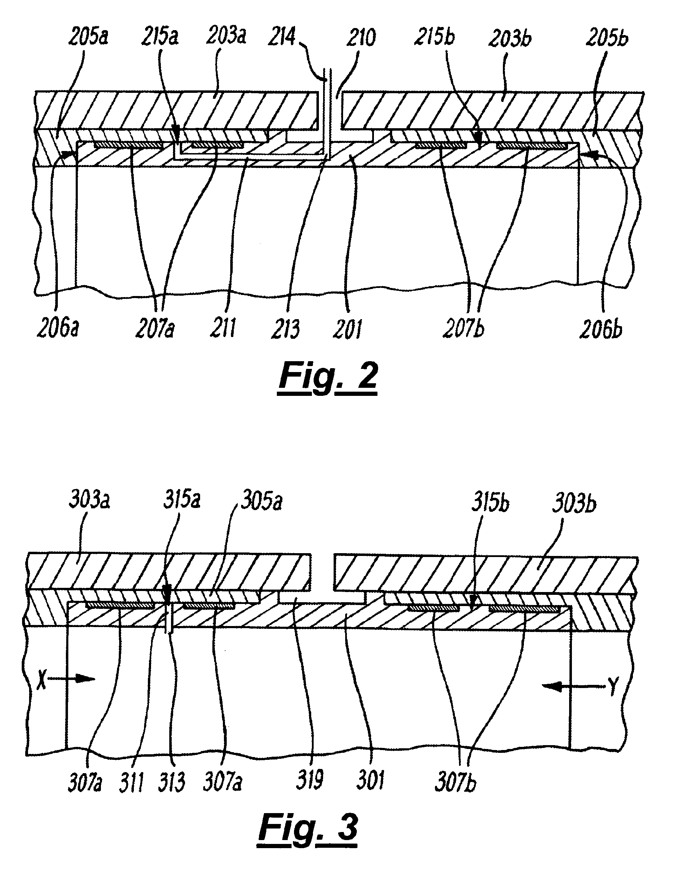

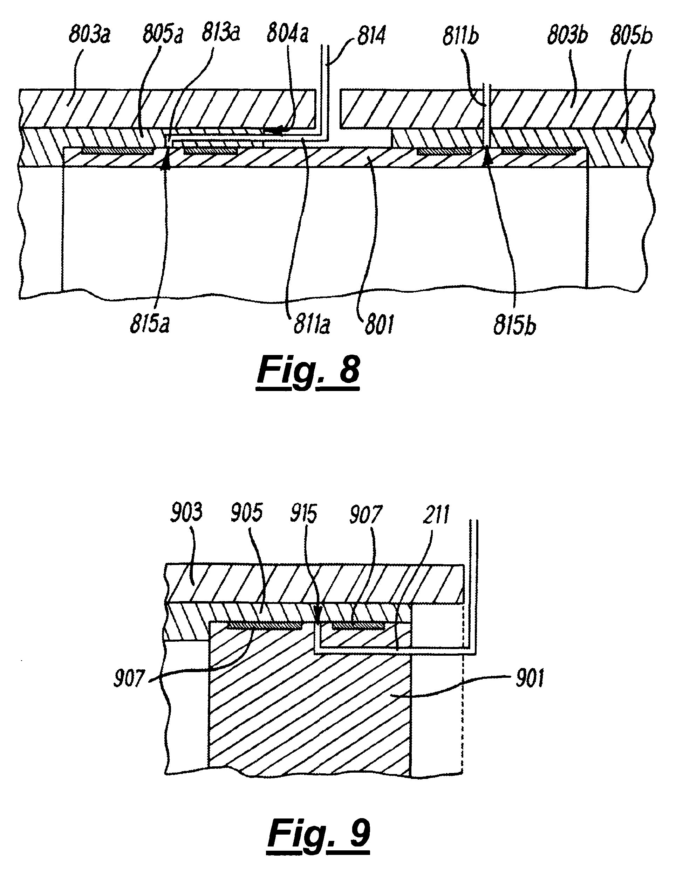

For the avoidance of doubt, the electrofusion fitting shown in Figure 3, the pipe lining shown in Figure 8 and the plug shown in Figure 9 are not consistent with the claimed invention and are included for reference only.

### Detailed description of preferred embodiments

As discussed in the background to the invention above, it is not presently possible to test the integrity of a weld formed between an electrofusion fitting and pipe linings in the field. An embodiment of the present invention is illustrated in Figure 2 and overcomes this problem with the prior art.

An improved electrofusion fitting 201 is formed by a cylindrical sleeve of a thermoplastic material having pairs of heating coils 207a,207b disposed toward either end of the fitting 201. The electrofusion fitting 201 is shaped and sized to be inserted into the end of a lined pipe section 203a/203b and received in a recess 206a/206b in the end of the pipe lining 205a/205b. The heating coils 207a/207b are embedded in the outer surface of the fitting 201, so as to be adjacent to and facing an inner surface of the pipe lining 205a/205b, such that when provided with electrical power the thermoplastic material of the fitting 201 and of the lining 205a/205b in the vicinity of the coils melts and fuses together, thus creating circumferential or annular welds between the fitting 201 and the pipe lining 205a/205b.

The electrofusion fitting 201 is also provided with a channel 211 that extends from an aperture 213 towards the middle of the fitting 201 to a point between the heating coils 207a, thus providing a means of fluid communication between a point proximal the end of the pipe 203a and a test zone (or test region) 215a. Due to the nature of the welds (i.e. circumferential or annular) the test zone 215a comprises an annular, or substantially annular, space between the fitting 201 and the lining 205a. After the heating coils 207a have been activated to weld the fitting 201 to the lining 205a, the integrity of the weld can be subjected to a hydrostatic test whereby a set pressure (e.g. in the region of a few hundred millibars to a few bars) of air or an incompressible liquid such as water or oil is supplied to the test zone 215a and then monitored to determine if there is any pressure loss which would correspond to a leak in one or both of the welds. A conduit 214 allows the air (or water, oil, etc.) to be provided to the aperture 213 from an external supply.

Of course, the welds produced at either end of the electrofusion fitting can be tested simultaneously, in sequence, or piece-wise as each weld is created (i.e. the first weld created and tested, then the second weld created and tested).

Once it has been determined that both electrofusion welds have been performed satisfactorily, the pipe lengths themselves can be welded together at pipe weld region 210.

Note that while it is preferred to employ an incompressible liquid such as water or oil to test the integrity of the weld, it will be understood that any suitable fluid (liquid or gas) could be employed. Furthermore, while the test could be performed as a pressure test this may be viewed as excessive or over-cautious due to the position of the weld and that it is not directly exposed to fluids carried by the pipes (in this embodiment at least). It is particularly advantageous that the integrity test can be carried out as a leak test rather than as a pressure test, because this reduces complexity and means that the test can be performed in situations where pressure tests might be unsuitable (e.g. where there are explosion or ignition risks).

Furthermore, while the electrofusion fitting has been described as comprising two heating coils, it will be understood that the coils could in fact be a single coil configured to provide two distinct weld zones (e.g. by forming discrete coil portions). It will also be understood that the weld zones could be created using different heating element types than heating coils, although this is a preferred arrangement. In other words, any arrangement that provides spaced welds between the electrofusion fitting and a pipe lining may be employed.

In this example, the channel 211 has been formed in an injection moulding process to manufacture the electrofusion fitting 201. However, it will be realised that a same or similar channel can be formed by drilling through the material of the electrofusion fitting. For example, two substantially radial blind holes can be created (e.g. by drilling or milling) in the outer surface of the electrofusion fitting - one proximal to the test region and one proximal to the middle of the fitting - and a longitudinal channel created (e.g. by drilling or milling) between them. Alternatively a suitably sized and shaped tube, microbore pipe or similar, can be placed into the electrofusion fitting when it is manufactured, e.g. as part of a casting process.

While the above-described electrofusion fitting 201 provides access to the test zone 215a from a position external to the pipeline, it is also envisaged that access to the test zone could be provided from a position internal to the pipeline. An alternative electrofusion fitting 301 is now described with reference to Figure 3, which comprises a similar test zone 315a between heating coils 307a and a corresponding channel 311 that extends between the test zone 315a and an aperture 313 on an inner surface of the electrofusion fitting 301.

In this arrangement, fluid access to the test zone 315a is achieved either through the bore of the lined pipe section (e.g. by inserting a rod or probe (not shown) in the direction of arrow X) or from the opposite end through the bore of the electrofusion fitting (e.g. by inserting a rod or probe (not shown) in the direction of arrow Y).

In a similar manner to that described above, a leak test or pressure test is performed on the test zone 315a via fluid channel 315a. Assuming the applied pressure is maintained for a predetermined time period, the weld process can be repeated at the opposite end of the electrofusion fitting 301 for the next lined pipe section 303b, and thereafter the pipe sections 303a,303b welded together. Note that a recess 319 formed in the outer surface of the electrofusion fitting 301 may be provided with an insulating material or cladding to prevent damage to the electrofusion fitting 301 when the pipe sections 303a,303b are welded together.

Note that to prevent fluid being carried by the pipeline from entering the channel 311, the aperture 313 should be plugged or sealed after testing. This can be effected by inserting a solid plug, injecting an epoxy or other setting or hardening substance, or the like.

This electrofusion fitting 301 is particularly useful in situations where it is undesirable, impractical or impossible to accommodate a conduit (such as 214 in Figure 2) to supply leak test or pressure test fluid to a channel leading to a test zone. This may be the case in narrow gap weld operations (such as typically used in s-lay pipe installation methods) where there is effectively no useable gap provided between adjacent pipe sections.

In the above described embodiment and arrangement, fluid access is provided to corresponding test regions 215b,315b between coils 207b,307b at the opposite end of the electrofusion fittings 201,301 via same or similarly arranged channels (disposed in the opposite side of the electrofusion fitting and hence not shown, although these could equally be disposed on the same side or at any other location in the electrofusion fittings 201,301).

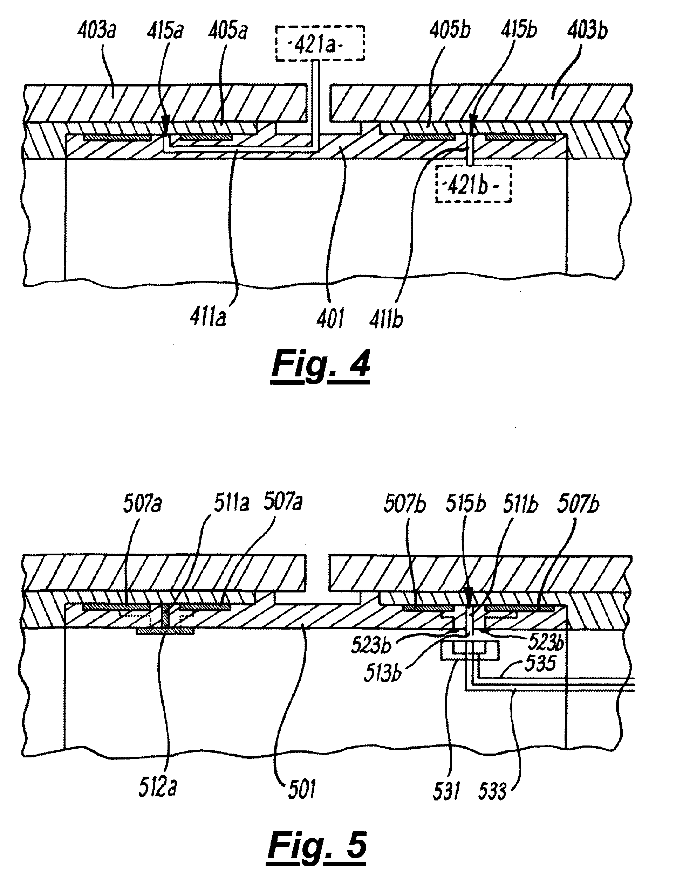

However, it is foreseen and illustrated in Figure 4 that an electrofusion fitting 401 can be provided with a first channel 411 a at one end of the electrofusion fitting 401 of a type similar to the channel 211 provided in electrofusion fitting 201 illustrated in Figure 2, and a second channel 411 b at the opposite end of the electrofusion fitting 401 of a type similar to the channel 311 provided in electrofusion fitting 301 illustrated in Figure 3.

In such an embodiment, the electrofusion fitting 401 can be welded to the first pipe lining 405a and the test region 415a leak tested using leak testing apparatus 421a located externally to the pipeline. The electrofusion fitting can then be welded to the second pipe lining 405b and, for example in narrow gap welding methods where there is no useable gap between the pipe sections 403a,403b, the test region 415b leak tested using leak testing apparatus 421 b located internally to the pipeline.

Figure 5 illustrates an electrofusion fitting 501 having channels 511a,511b at both ends of the electrofusion fitting 501 of a type similar to the channel 311 provided in electrofusion fitting 301 illustrated in Figure 3. Also in this embodiment, electrical supply to the heating coils 507a,507b is provided via contacts disposed on an inner surface of the electrofusion fitting 501 (as indicated by reference numerals 523b). A probe 531 is located internally of the pipeline and carries a fluid supply line 533 and an electrical supply line 535 and engages with the aperture 513b and the contacts 523b on the inner surface of the electrofusion fitting 501.

Accordingly, electrical power can be provided from the electrical supply line 535 to the heating coils 507a,507b via contacts 523b to perform the weld step without having to route wires out of or through the pipeline. Subsequently, the weld can be tested for leaks via the fluid supply line 533 which is in fluid communication with test region 515b via aperture 513b and channel 511 b. After the weld has been created and tested to ensure it is satisfactory, the probe 531 is removed and the channel sealed.

In this particular embodiment, channel 511a has been sealed by the insertion of a solid plug 512a which not only closes the channel but electrically isolates the contacts (not visible, accordingly). It is envisaged that the contacts and the aperture could be located within a recess and the plug shaped to fit the recess so as to maintain a constant inner diameter within the electrofusion fitting. However, the plug could instead be bevelled to provide a smooth and gradual change of cross section in this area to reduce or minimise turbulent effects.

The embodiments described above with reference to Figures 2 to 5 illustrate a preferred arrangement in which the heating elements (coils, in these examples) are disposed on an outer face of the electrofusion fitting so as to create a weld between that outer face and an inner face of the pipe lining. In each of the examples shown, a recess has been provided in the lining to receive the electrofusion fitting, and the electrofusion fitting has been shaped and sized so as to maintain a continuous inner diameter during the transition from lining to electrofusion fitting to lining again. Of course, it will be realised that there may be no recess, and the electrofusion fitting may simply have an outer diameter commensurate with an inner diameter of the pipe lining - with little or no consideration given to minimising turbulent effects within the pipeline.

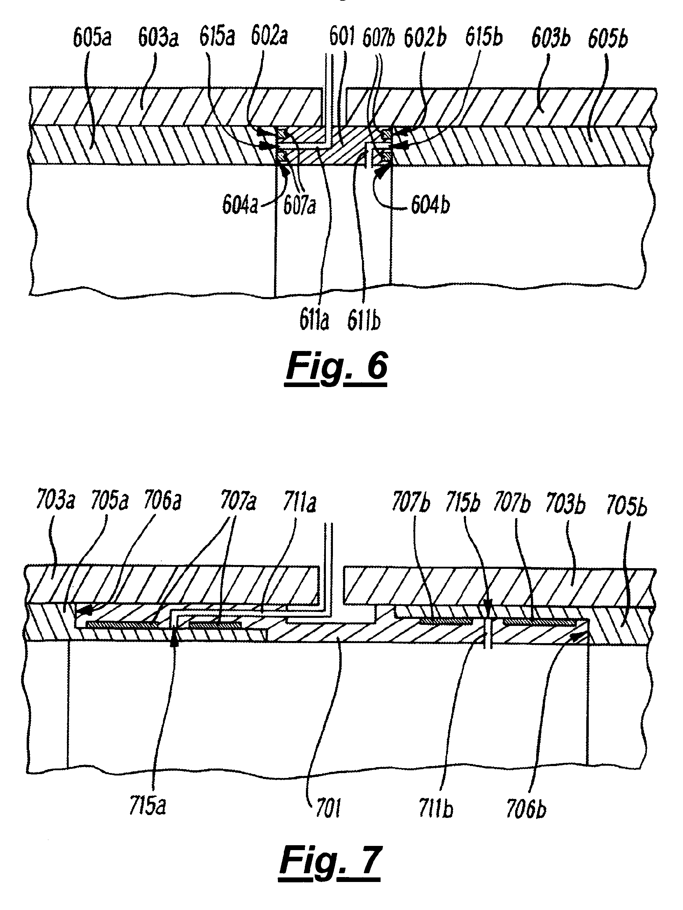

However, Figure 6 presents a further alternative embodiment in which heating coils 607a,607b are proved in the end faces 602a,602b of an electrofusion fitting 601 to engage directly with corresponding end faces 604a,604b of the pipe linings 605a,605b.

While the electrofusion fitting 601 has been illustrated as having a first channel 611a at one end of the electrofusion fitting 601 of a type similar to channel 211 of the electrofusion fitting 201 illustrated in Figure 2, and a second channel 611 b at the opposite end of the electrofusion fitting 601 of a type similar to channel 311 of the electrofusion fitting 301 illustrated in Figure 3, it will now be realised that two same channels of either kind, similar, or equivalent, may be employed.

In any case, the arrangement is such that after electrical power has been supplied to the heating coils 607a,607b, two welds are created which define test regions 615a,615b there between, and the channels 611a,611 b as in previous embodiments provide a means for performing a leak test or pressure test in this region to determine the integrity and/or effectiveness of the welds.

In Figure 7, an electrofusion fitting 701 bearing some similarities to the electrofusion fitting 401 illustrated in Figure 4 is presented. Again, the electrofusion fitting 701 is provided with different channels 711 a,711 b at opposite ends of the electrofusion fitting 701 (of types similar to the channels 211,311 provided in electrofusion fittings 201,301 illustrated in Figures 2 and 3, respectively). However, in this embodiment it can be seen that rather than a recess (see for example 706b) being provided in the inner face of the pipe lining 705a, a recess 706a is provided in the outer face of the pipe lining 705a and the corresponding end of the electrofusion fitting has an outer diameter commensurate with an inner diameter of the pipe section 703a, and an inner diameter commensurate with an outer diameter of the recessed pipe lining 705a. The heating coils 707a are therefore disposed on an inner surface of the electrofusion fitting 701. However, the test region 705a is effectively in almost the same location as in previous embodiments.

Although Figure 7 illustrates a non-symmetrical electrofusion fitting 701 with different interfaces, it will of course be realised that an electrofusion fitting could be configured to be symmetrical; i.e. where both ends of the electrofusion fitting have an outer diameter commensurate with an inner diameter of the pipe section, and an inner diameter commensurate with an outer diameter of a recessed pipe lining.

Each of the above described embodiments benefit from the Applicant's realisation that by creating discrete welds there are resulting un-welded zones there between that can be subjected to leak tests or pressure tests to test the integrity and/or effectiveness of the weld between the electrofusion fitting and the pipe lining; and exemplary electrofusion fittings have been described which incorporate and/or accommodate this functionality. However, the Applicant also realises that similar benefits may be obtained by modification of the pipe linings themselves.

Figure 8 presents an alternative arrangement in which rather than a channel being provided through the electrofusion fitting 801 to the test region 815a, a channel 811a is instead provided through the pipe lining 805a to the test region 815a. Leak testing or pressure testing can be carried out in an analogous manner to that described in relation to embodiments in which the channel is provided through the electrofusion fitting itself.

This arrangement is particularly advantageous as it permits the benefits of the invention to be realised without requiring modifications to an electrofusion fitting other than to ensure discrete welds which define a test region therebetween. For example, a blind hole can be drilled in an inner surface of the pipe lining 805a to define an aperture 813a and a substantially perpendicular hole drilled between the end face 804a of the pipe lining 805a and the blind hole to create the fluid channel 811a. Subsequently, a conduit 814 (with an elbow, articulation, or other bend as appropriate) can be inserted into the channel 811 via the end face 804a to supply leak test or pressure test fluid to the test zone 815a.

The electrofusion fitting 801 can then be inserted, the weld step performed, and the integrity of the weld subsequently tested.

Alternatively, as illustrated at the opposite end of the arrangement shown in Figure 8, a channel 811 b can be drilled substantially radially through the pipe section 803b and the pipe lining 805b. This step can be performed before or after the electrofusion fitting 801 is in place; in either case, direct access is then provided to the test region 815b to allow leak testing or pressure testing to be performed post-welding.

It will of course be understood that while the present invention has been illustrated with reference to electrofusion fittings for joining lined pipe sections, such an electrofusion fitting can be employed to join standalone plastic pipes, or indeed to provide a plug or to blank off the end of a lined pipe section or standalone plastic pipe. Figure 9 illustrates such a plug 901 that has been inserted into the end of a lined pipe 903 to provide a temporary or a permanent closure. As with the above described electrofusion fittings, the plug 901 is received in a recess in the pipe lining 905, and has heating coils 907 which, when supplied with electrical power, fuse the plug 901 to the lining 905. A test region 915 is provided between the distinct weld zones formed by the heating coils 907, and fluid access is via channel 211 which extends through an end face of the plug 901. It will be understood that, similar to channel 811 b in Figure 8, a channel could be drilled through the pipe 903 and lining 905 to provide fluid access to the test region 915.

Common techniques for laying pipe on the sea floor include s-lay pipeline installation and j-lay pipeline installation. In these methods, pipe is fed out from the stern of a pipe-laying vessel as it travels forward; s-lay refers to the "s" shape of the pipeline between the vessel and the seabed resulting from the substantially horizontal deployment direction, and j-lay refers to the "j" shape of the pipeline between the vessel and the seabed resulting from the substantially vertical deployment direction. In s-lay and j-lay operations, a pipeline can be constructed length-by-length in which case adjacent sections of pipe are welded on board (as contrasted with a reel-lay method in which case a continuous length of pipe is deployed from a reel).

Accordingly, a pipeline consisting of several lined pipe sections can be constructed according to the electrofusion fitting methods of the invention herein described, and the integrity of the weld between fittings and linings checked in situ as part of the pipeline fabrication process. In fact, even using reel-lay or tow-in pipeline installation methods, subsequent lengths of lined pipe (which may be one or several km long rather than, say, 12 m long as used in length-by-length on-deck fabrication methods) can be joined and the joint integrity tested - and of course the continuous pipe (deployed from reel or by tow-in) might itself consist of several lined pipe sections so joined and tested onshore.

Very fast modern pipeline welding makes use of a closed bevel. However, to date it has not been possible to use a closed bevel approach in conjunction with electrofusion fittings. Electrical leads to electrofusion fittings have typically been passed through the gap between adjacent metal pipe length ends that are subsequently welded; the electrical leads remaining in the weld. This can be harmful to the integrity of the weld. The Applicant's earlier International Application Publication Number WO 2010/041016 sought to overcome this problem by providing electrical leads which extend through the fitting to an inner surface to allow the heating coils to be energised from within the pipeline bore and thus avoid weld contamination.

The Applicant has developed an alternative approach which permits laybarge productivity to be improved by allowing the use of a closed bevel approach that does not require access to the pipeline bore to energise the heating coils. Furthermore (or alternatively) access to leak test or pressure test the weld can be achieved through a closed bevel.

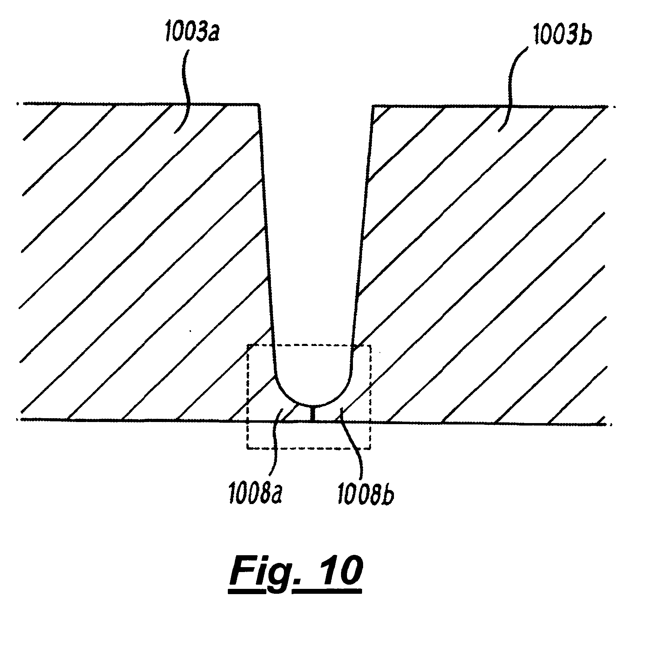

Figure 10 shows adjacent ends of lined pipe sections 1003a, 1003b comprising J-bevels machined in preparation for automatic welding. The ends have been fitted up together such that the closed bevel nibs 1008a,1008b are in contact (so called "closed" fit up) to enable the welding of the root pass at the start of the girth weld, although it will be appreciated that a narrow gap might be provided there between (so-called "narrow gap" fit up).

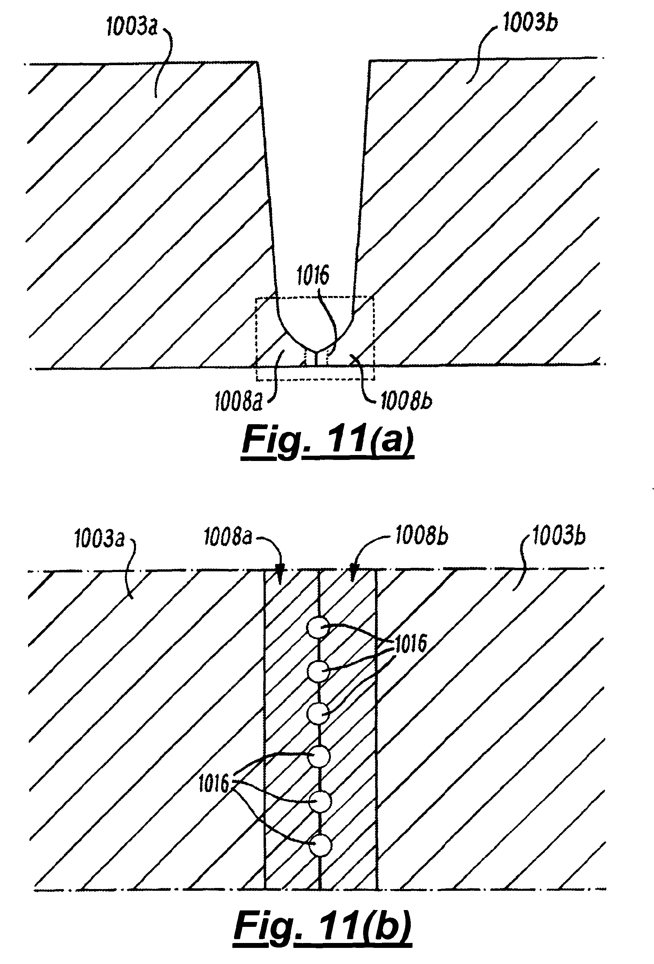

As shown in Figure 11, one or more holes 1016 can then be drilled through the closed bevel to provide access there through. The holes 1016 can be grouped or distributed around the circumference of the bevel, as illustrated in plan view in Figure 11 (b).

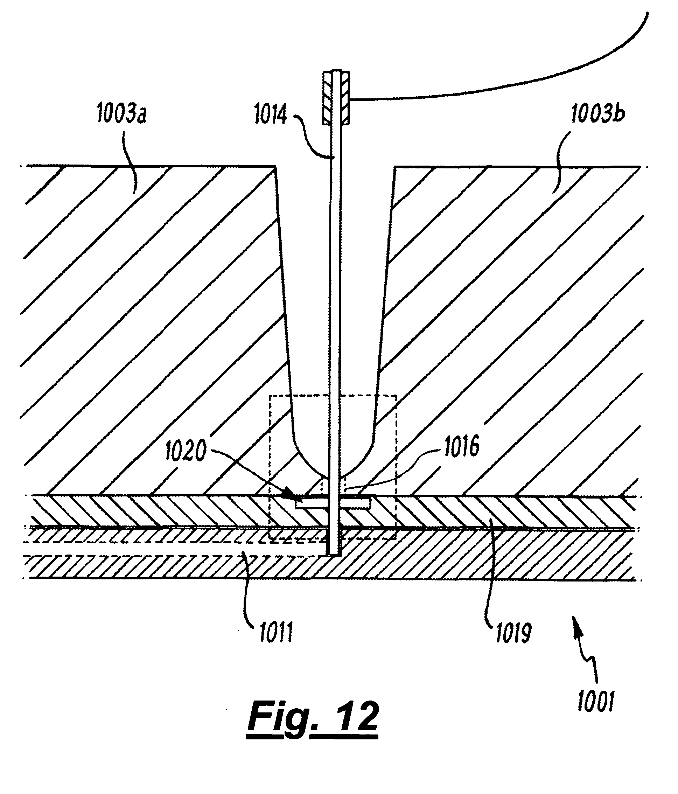

A portion of an electrofusion fitting 1001 in accordance with an aspect of the invention is shown in Figure 12, extending between corresponding pipe linings (not shown) of pipe sections 1003a, 1003b. The hole 1016 drilled through the closed bevel allows access through the closed bevel to channel 1011 which extends to a test region (not shown but as or similar to those described in previous embodiments). A probe 1014 can be inserted through the closed bevel and received in the channel 1011 to supply leak test or pressure test fluid to the test region.

An insulating layer is shown in recess 1019 of the electrofusion fitting 1001 which protects the electrofusion fitting 1001 from heat damage while the ends of pipe sections 1003a, 1003b are welded together. A further insulating ribbon 1020 is provided immediately below the closed bevel to protect the insulating layer and the electrofusion fitting from welding arcs particularly during the root bead pass.

Once the integrity of the weld between the electrofusion fitting 1001 and one or both of the pipe linings has been tested, the probe 1014 can be withdrawn and the ends of pipe sections 1003a, 1003b welded together, beginning with the root bead pass. Molten metal created in the weld pool of the root pass melts the nibs 1008a,1008b and as the molten metal cools and solidifies the hole (or holes) 1016 are filled with solid weld metal. Accordingly, a weld can be created between the ends of pipe sections 1003a, 1003b that is not compromised in the way that prior art welds have been compromised.

Although the probe 1014 is described as providing a means for supplying leak test or pressure test fluid to the test region through the closed bevel, it will also be understood that a similar probe and a similar arrangement will provide a means for similarly, simultaneously or alternatively supplying electrical power to the heating coils of the electrofusion fitting through the closed bevel - for example via a contact or contacts disposed on an outer surface of the electrofusion fitting (and in electrical communication with the heating coils) that receives the probe. Two sections of lined pipe can therefore be joined and/or the joint tested using a closed bevel approach, which allows high speed automatic pipeline welding techniques to be employed.

The final costs of a pipeline are dependent on the rate of laybarge progress, which in turn is dependent on welding production rates. The present invention also permits an increase in welding productivity with a corresponding reduction in the cost of producing a given length of pipeline.

The invention provides improvements to electrofusion fittings that enable the integrity of a weld between an electrofusion fitting and a pipe lining (or stand-alone pipe) to be tested in the field, and corresponding methods of installation and testing. An electrofusion fitting for joining sections of lined pipe has heating elements configured to create at least one weld between the electrofusion fitting and a pipe lining, and a channel provides fluid access to a test region between the electrofusion fitting and the pipe lining to allow leak testing to be performed. The channel is provided through the fitting itself. Methods of fabricating or laying pipeline may incorporate use of the improved fitting whether using length-by-length construction methods or joining subsequent reel-laid or towed-in pipe lengths. A closed bevel welding approach, permitting high speed automatic pipeline welding processes to be employed, is described in which the closed bevel is drilled through to allow access there through for providing leak testing and/or electrical power to the heating elements.

Throughout the specification, unless the context demands otherwise, the terms 'comprise' or 'include', or variations such as 'comprises' or 'comprising', 'includes' or 'including' will be understood to imply the inclusion of a stated integer or group of integers, but not the exclusion of any other integer or group of integers.

The foregoing description of the invention has been presented for the purposes of illustration and description and is not intended to be exhaustive or to limit the invention to the precise form disclosed. The described embodiments were chosen and described in order to best explain the principles of the invention and its practical application to thereby enable others skilled in the art to best utilise the invention in various embodiments and with various modifications as are suited to the particular use contemplated. Therefore, further modifications or improvements may be incorporated without departing from the scope of the invention as defined by the appended claims.

## Claims

1. An electrofusion fitting (201) for joining sections of lined pipe, the electrofusion fitting comprising one or more heating elements (207a), disposed on a surface of the electrofusion fitting (201) and configured to create, in use, at least one weld between the electrofusion fitting (201) and a pipe lining (205a), and a channel (211) extending at least partially through the electrofusion fitting (201) to provide fluid access to a test region (215a) between the electrofusion fitting (201) and the pipe lining (205a) to leak test the at least one weld, wherein the channel (211) extends between an aperture (213) in a surface of the electrofusion fitting (201) and the test region (215a), and **characterised in that** the aperture (213) is longitudinally spaced from the test region (215a) and the channel (211) extends substantially longitudinally through the electrofusion fitting (201).

2. The electrofusion fitting (201) according to claim 1, wherein the one or more heating elements (207a) are configured to produce one or more circumferential or annular welds between the electrofusion fitting (201) and the pipe lining (205a).

3. The electrofusion fitting (201) according to claim 1 or claim 2, wherein the test region (215a) is disposed between two circumferential or annular welds.

4. The electrofusion fitting (201) according to any preceding claim, wherein the test region (215a) is a substantially annular space between the electrofusion fitting (201) and the pipe lining (205a).

5. The electrofusion fitting (201) according to any preceding claim, wherein the aperture (213) is formed on an outer surface of the electrofusion fitting (201).

6. The electrofusion fitting (201) according to claim 5, wherein the aperture (213) is located so as to be proximal the end of a pipe (203a) into which the electrofusion fitting (201) is configured for insertion.

7. The electrofusion fitting (201) according to any preceding claim, wherein the aperture (213) is configured to receive a conduit (214) for the supply of leak test or pressure test fluid.

8. The electrofusion fitting (1001) according to any of preceding claim, wherein the aperture is configured to receive a probe (1014) via a hole (1016) drilled through a closed bevel between the lined pipe sections (1003a,1003b).

9. The electrofusion fitting according to any preceding claim, wherein the electrofusion fitting further comprises one or more electrical contacts disposed on an inner surface of the electrofusion fitting and connected to the one or more heating elements through the electrofusion fitting.

10. The electrofusion fitting according to any of claims 1 to 8, wherein the electrofusion fitting further comprises one or more electrical contacts disposed on an outer surface of the electrofusion fitting and connected to the one or more heating elements, the one or more electrical contacts configured to receive a probe for the supply of electrical power to the heating elements via one or more holes drilled through a closed bevel between the lined pipe sections.

11. The electrofusion fitting (201,1001) according to any preceding claim, wherein the channel (211,1011) is at least partially drilled through the electrofusion fitting (201,1011), and/or wherein a suitable tube or pipe is inserted into the electrofusion fitting (201,1011) during manufacture by a casting or injection moulding process.

12. The electrofusion fitting (201) according to any preceding claim, wherein the electrofusion fitting comprises at least two pairs of heating coils (207a,207b) disposed at either end of the electrofusion fitting (201) defining at least one test region at each end (215a,215b) of the electrofusion fitting (201), and at least two channels (211) extending through the electrofusion fitting to provide fluid access to corresponding at least two test regions (215a,215b).

13. The electrofusion fitting (201,401) according to claim 12, wherein both of two channels (211) extending through the electrofusion fitting extend substantially longitudinally through the electrofusion fitting (201), or wherein one of the channels (411 b) extends substantially radially through the electrofusion fitting (401).

14. The electrofusion fitting (201) according to any preceding claim, wherein the electrofusion fitting (201) comprises a thermoplastic material.

15. The electrofusion fitting (701) according to any preceding claim, wherein the electrofusion fitting is configured to be received in a recess in the end of the pipe lining (705a,705b), formed in an inner surface (706a) or an outer surface (706b) of the pipe lining, wherein the heating elements are arranged on an outer surface (707b) or an inner surface (707a) of the electrofusion fitting.

16. The electrofusion fitting (601) according to any of claims 1 to 14, wherein the electrofusion fitting (601) is configured to abut the end of the pipe lining (605a), and wherein the heating elements (607a) are arranged on an abutting end (602a) of the electrofusion fitting (601).

17. A method of testing a weld between an electrofusion fitting (201) and a pipe lining (205a), comprising creating at least one weld between the electrofusion fitting (201) and the pipe lining (205a), and providing fluid through a channel (211) in the electrofusion fitting (201) to a test region (215a) between the electrofusion fitting (201) and the pipe lining (205a) to leak test the at least one weld, wherein the channel (211) extends between an aperture (213) in a surface of the electrofusion fitting (201) and the test region (215a), and **characterised in that** the aperture (213) is longitudinally spaced from the test region (215a) and the channel (211) extends substantially longitudinally through the electrofusion fitting (201).

18. The method according to claim 17, comprising creating two annular welds between the electrofusion fitting (201) and the pipe lining (205a), wherein the test region (215a) is bounded by the annular welds.

19. The method according to claim 17 or claim 18, comprising cooling the electrofusion fitting (201) and the pipe lining (205a) after creating the at least one weld and prior to leak testing the at least one weld.

20. The method according to any of claims 17 to 19, comprising drilling one or more holes (1016) in a closed bevel formed between corresponding lined pipe sections (1003a,1003b), providing fluid to the test region via the one or more holes (1016) and/or providing electrical power to one or more heating coils of the electrofusion fitting via the one or more holes (1016) to create the at least one weld.

## Patentansprüche

1. Heizwendel-Fitting (201) zum Verbinden von Abschnitten ausgekleideter Rohre, wobei das Heizwendel-Fitting mindestens ein Heizelement (207a) umfasst, das an einer Oberfläche des Heizwendel-Fittings (201) angeordnet ist und so konfiguriert ist, dass es bei Gebrauch mindestens eine Schweißnaht zwischen dem Heizwendel-Fitting (201) und einer Rohrauskleidung (205a) erzeugt, und einen Kanal (211), der sich zumindest teilweise durch das Heizwendel-Fitting (201) ausdehnt, um einen Fluidzugang zu einem Testbereich (215a) zwischen dem Heizwendel-Fitting (201) und der Rohrverkleidung (205a) bereitzustellen, um die mindestens eine Schweißnaht auf Dichtheit zu testen, wobei sich der Kanal (211) zwischen einer Öffnung (213) in einer Oberfläche des Heizwendel-Fittings (201) und dem Testbereich (215a) ausdehnt und **dadurch gekennzeichnet ist, dass** die Öffnung (213) längs von dem Testbereich (215a) abgesetzt ist und sich der Kanal im Wesentlichen längs durch das Heizwendel-Fitting (201) ausdehnt.

2. Heizwendel-Fitting (201) nach Anspruch 1, wobei das mindestens eine Heizelement (207a) so konfiguriert ist, dass es mindestens eine Rund- oder Ringnaht zwischen dem Heizwendel-Fitting (201) und der Rohrverkleidung (205a) erzeugt.

3. Heizwendel-Fitting (201) nach Anspruch 1 oder Anspruch 2, wobei der Testbereich zwischen zwei Rund- oder Ringnähten angeordnet ist.

4. Heizwendel-Fitting (201) nach einem der vorstehenden Ansprüche, wobei der Testbereich (215a) ein im Wesentlichen ringförmiger Bereich zwischen dem Heizwendel-Fitting (201) und der Rohrauskleidung ist.

5. Heizwendel-Fitting (201) nach einem der vorstehenden Ansprüche, wobei die Öffnung an einer Außenfläche des Heizwendel-Fittings (201) ausgebildet ist.

6. Heizwendel-Fitting (201) nach Anspruch 5, wobei die Öffnung (213) so angeordnet ist, dass sie sich nahe am Ende eines Rohrs (203a) befindet, für das das Heizwendel-Fitting (201) zum Einsetzen konfiguriert ist.

7. Heizwendel-Fitting (201) nach einem der vorstehenden Ansprüche, wobei die Öffnung (213) so konfiguriert ist, dass sie eine Leitung (214) für die Versorgung mit einem Fluid für einen Dichtheitstest oder Drucktest aufnimmt.

8. Heizwendel-Fitting (1001) nach einem der vorstehenden Ansprüche, wobei die Öffnung so konfiguriert ist, dass sie eine Sonde (1014) über ein Loch (1016) aufnimmt, das durch eine geschlossene Schräge zwischen den ausgekleideten Rohrabschnitten (1003a, 1003b) gebohrt ist.

9. Heizwendel-Fitting nach einem der vorstehenden Ansprüche, wobei das Heizwendel-Fitting ferner mindestens einen elektrischen Kontakt umfasst, der an einer Innenfläche des Heizwendel-Fittings angeordnet und mit dem mindestens einen Heizelement über das Heizwendel-Fitting verbunden ist.

10. Heizwendel-Fitting nach einem der Ansprüche 1 bis 11, wobei das Heizwendel-Fitting ferner mindestens einen elektrischen Kontakt umfasst, der an einer Außenfläche des Heizwendel-Fittings angeordnet und mit dem mindestens einen Heizelement verbunden ist, wobei der mindestens eine Kontakt so konfiguriert ist, dass er eine Sonde zur Versorgung der der Heizelemente über mindestens ein Loch, das durch eine geschlossene Schräge zwischen den ausgekleideten Rohrabschnitten gebohrt ist, mit Strom aufnimmt.

11. Heizwendel-Fitting (201, 1001) nach einem der vorstehenden Ansprüche, wobei der Kanal (211, 1011) zumindest teilweise durch das Heizwendel-Fitting (201, 1011) gebohrt ist und/oder wobei während der Herstellung durch ein Geiß- oder Spritzgussverfahren ein geeigneter Schlauch oder ein Rohr in das Heizwendel-Fitting (201, 1011) eingesetzt wird.

12. Heizwendel-Fitting (201) nach einem der vorstehenden Ansprüche, wobei das Heizwendel-Fitting mindestens zwei Heizwendelpaare (207a, 207b) umfasst,
die an jedem Ende des Heizwendel-Fittings (201) angeordnet sind und mindestens einen Test-Bereich an jedem Ende (215a, 215b) des Heizwendel-Fittings (201) definieren, und mindestens zwei Kanäle (211), die sich durch das Heizwendel-Fitting ausdehnen, um einen Fluidzugang zu zumindest zwei entsprechenden Bereichen (215a, 215b) bereitzustellen.

13. Heizwendel-Fitting (201, 401) nach Anspruch 18, wobei sich beide der zwei Kanäle (211), die sich durch das Heizwendel-Fitting ausdehnen, im Wesentlichen längs durch das Heizwendel-Fitting (201) ausdehnen oder wobei sich einer der Kanäle (411 b) im Wesentlichen strahlenförmig durch das Heizwendel-Fitting (401) ausdehnt.

14. Heizwendel-Fitting (201) nach einem der vorstehenden Ansprüche, wobei das Heizwendel-Fitting (201) ein thermoplastisches Material umfasst.

15. Heizwendel-Fitting (701) nach einem der vorstehenden Ansprüche, wobei das Heizwendel-Fitting so konfiguriert ist, dass es in eine Vertiefung im Ende der RohrAuskleidung (705a, 705b) aufgenommen werden kann, die in einer Innenfläche (706a) oder einer Außenfläche (706b) einer
Rohrauskleidung ausgebildet sein kann, wobei die Heizelemente an einer Außenfläche (707b) oder einer Innenfläche (707a) des Heizwendel-Fittings angeordnet sind.

16. Heizwendel-Fitting (601) nach einem der Ansprüche 1 bis 17, wobei das Heizwendel-Fitting (601) so konfiguriert ist, dass es an das Ende der Rohrauskleidung (605a) angrenzt und wobei die Heizelemente (607a) an einem angrenzenden Ende (602a) des Heizwendel-Fittings (601) angeordnet sind.

17. Verfahren zum Testen einer Schweißnaht zwischen einem Heizwendel-Fitting (201) und einer Rohrauskleidung (205a), umfassend das Erzeugen mindestens einer Schweißnaht zwischen dem Heizwendel-Fitting (201) und der Rohrauskleidung (205a) und das Bereitstellen von Fluid über einen Kanal (211)
in dem Heizwendel-Fitting (201) an einen Testbereich (215a) zwischen dem Heizwendel-Fitting (201) und der Rohrauskleidung (205a), um die mindestens eine Schweißnaht auf Dichtheit zu prüfen, wobei sich der Kanal (211) zwischen einer Öffnung (213) in einer Oberfläche des Heizwendel-Fittings (201) und dem Testbereich (215a) ausdehnt, und **dadurch gekennzeichnet, dass** die Öffnung (213) längs von dem Testbereich (215a) abgesetzt ist und sich der Kanal (211) im Wesentlichen längs durch das Heizwendel-Fitting (201) ausdehnt.

18. Verfahren nach Anspruch 34, umfassend das Erzeugen zweier Ringnähte zwischen dem Heizwendel-Fitting (201) und der Rohrauskleidung (205a), wobei der Testbereich (215a) durch die Ringnähte begrenzt ist.

19. Verfahren nach einem der Ansprüche 34 bis 36, umfassend das Kühlen des Heizwendel-Fittings (201) und der Rohrauskleidung (205a) nach dem Erzeugen der mindestens einen Schweißnaht und vor dem Testen der mindestens einen Schweißnaht auf Dichtheit.

20. Verfahren nach einem der Ansprüche 34 bis 37, umfassend das Bohren mindestens eines
Lochs (1016) in eine geschlossenen Schräge, die zwischen entsprechenden ausgekleideten Rohrabschnitten (1003a, 1003b) ausgebildet ist, wobei dem Testbereich über das mindestens eine Loch (1016) Fluid bereitgestellt wird und/oder dem mindestens einen Heizwendel des Heizwendel-Fittings über das mindestens eine Loch (1016) elektrische Energie bereitgestellt wird, um die mindestens eine Schweißnaht zu erzeugen.

## Revendications

1. Un raccord électrosoudable (201) pour raccorder des sections d'un tube avec revêtement intérieur, le raccord électrosoudable comprenant un ou plusieurs éléments chauffants (207a) disposés sur une surface du raccord électrosoudable (201) et configuré pour créer, en utilisation, au moins une soudure entre le raccord électrosoudable (201) et un revêtement interne de tube (205a), et un canal (211) s'étendant au moins partiellement à travers le raccord électrosoudable (201) pour que le fluide puisse accéder à une zone testée (215a) entre le raccord électrosoudable (201) et le revêtement interne de tube (205a) pour tester l'étanchéité d'au moins une soudure, dans laquelle le canal (211) se prolonge entre
une ouverture (213) dans une surface du raccord électrosoudable (201) et la zone testée (215a), et **caractérisé par le fait que** l'ouverture (213) est espacée longitudinalement dans la zone testée (215a) et que le canal s'étend beaucoup longitudinalement à travers le raccord électrosoudable (201).

2. Le raccord électrosoudable (201) conforme à la revendication 1, dans lequel un ou plusieurs éléments chauffants (207a) sont configurés pour produire une ou plusieurs soudures circonférentielles ou annulaires entre le raccord électrosoudable (201) et le revêtement interne du tube (205a).

3. Le raccord électrosoudable (201) conforme à la revendication 1 ou à la revendication 2, dans lequel la zone testée est disposée entre deux soudures circonférentielles ou annulaires.

4. Le raccord électrosoudable (201) conforme à l'une des revendications précédentes, dans lequel la zone testée (215a) est un espace annulaire entre le raccord électrosoudable (201) et le revêtement interne du tube.

5. Le raccord électrosoudable (201) conforme à l'une des revendications précédentes, dans lequel l'ouverture est formée sur une surface extérieure du raccord électrosoudable (201).

6. Le raccord électrosoudable (201) conforme à la revendication 5, dans lequel l'ouverture (2013) est positionnée pour être proche de l'extrémité d'un tube (203a) dans lequel le raccord électrosoudable (201) est configuré pour y être inséré.

7. Le raccord électrosoudable (201) conforme à l'une des revendications précédentes, dans lequel l'ouverture (213) est configurée pour recevoir un conduit (214) permettant d'alimenter le fluide utilisé pour l'essai d'étanchéité ou pour l'essai sous pression.

8. Le raccord électrosoudable (1001) conforme à l'une des revendications précédentes, dans lequel l'ouverture est configurée pour recevoir une sonde (1014) via un trou (1016) percé à travers un biseau fermé entre les sections du tube avec revêtement interne (1003a, 1003b).

9. Le raccord électrosoudable conforme à l'une des revendications précédentes, dans lequel le raccord électrosoudable comprend un ou plusieurs contacts électriques disposés sur une surface interne du raccord électrosoudable et raccordés à un ou plusieurs éléments chauffants à travers le raccord électrosoudable.

10. Le raccord électrosoudable conforme à l'une des revendications 1 à 11, dans lequel le raccord électrosoudable comprend en outre un ou plusieurs contacts électriques disposés sur une surface extérieure du raccord électrosoudable et raccordés à un ou plusieurs éléments chauffants, le ou les contacts électriques étant configurés pour recevoir une sonde permettant d'alimenter en courant électrique les éléments chauffants via un ou plusieurs trou(s) percés à travers un biseau fermé entre les sections du tube avec revêtement interne.

11. Le raccord électrosoudable (201, 1001) conforme à l'une des revendications précédentes, dans lequel le canal (211, 1011) est au moins partiellement percé à travers le raccord électrosoudable (201, 1011) et/ou dans lequel un tube ou un tuyau approprié est inséré dans le raccord électrosoudable (201, 1011) pendant la fabrication à l'aide d'un procédé de coulée ou de moulage par injection.

12. Le raccord électrosoudable (201) conforme à l'une des revendications précédentes, dans lequel le raccord électrosoudable comprend au moins deux paires de bobines de chauffage (207a, 207b) disposées à une extrémité du raccord électrosoudable (201) délimitant au moins une zone testée à chaque extrémité (215a, 215b) du raccord électrosoudable (201), et au moins deux canaux (211) se prolongeant à travers le raccord électrosoudable pour que le fluide puisse avoir accès au moins à deux zones testées (215a, 215b).

13. Le raccord électrosoudable (201, 401) conforme à la revendication 18, dans lequel les deux canaux (211) à travers le raccord électrosoudable se prolongent de manière importante longitudinalement à travers le raccord électrosoudable (201) ou dans lequel l'un des canaux (411 b) se prolonge de manière importante radialement à travers le raccord électrosoudable (401).

14. Le raccord électrosoudable (201) conforme à l'une des revendications précédentes, dans lequel le raccord électrosoudable (201) comprend un matériau thermoplastique.

15. Le raccord électrosoudable (701) conforme à l'une des revendications précédentes, dans lequel le raccord électrosoudable est configuré pour se placer dans une cavité à l'extrémité du revêtement intérieur de tuyau (705a, 705b), formée dans une surface intérieure (706a) ou une surface extérieure (706b) du revêtement intérieur du tube, dans lequel les éléments chauffants sont disposés sur une surface extérieure (707b) ou une surface intérieure (707a) du raccord électrosoudable.

16. Le raccord électrosoudable (601) conforme à l'une des revendications 1 à 17, dans lequel le raccord électrosoudable (601) est configuré pour buter contre l'extrémité du revêtement interne du tube (605a) et dans lequel les éléments chauffants (607a) sont disposés sur une extrémité en butée (602a) du raccord électrosoudable (601).

17. Une méthode pour tester une soudure entre un raccord électrosoudable (201) et un revêtement interne de tube (205a), en créant au moins une soudure entre le raccord électrosoudable (201) et le revêtement interne de tube (205a), et en permettant au fluide d'accéder via un canal (211)
dans le raccord électrosoudable (201) à une zone testée (215a) entre le raccord électrosoudable (201) et le revêtement interne du tube (205a) pour tester l'étanchéité d'au moins une soudure, dans lequel le canal (211) s'étend entre une ouverture (213) dans une surface du raccord électrosoudable (201) et la zone testée (215a) , et **caractérisée par le fait que** l'ouverture (213) est espacée longitudinalement de la zone testée (215a) et **par le fait que** le canal (211) s'étend de manière importante longitudinalement à travers le raccord électrosoudable (201).

18. La méthode correspondant à la revendication 34, consistant à créer deux soudures annulaires entre
le raccord électrosoudable (201) et le revêtement interne du tube (205a), dans lequel la zone testée (215a) est limitée par les soudures annulaires.

19. La méthode correspondant à l'une des revendications 34 à 36, comprenant le refroidissement du raccord électrosoudable (201) et du revêtement interne du tube (205a) après avoir créé au moins une soudure et avant d'avoir testé l'étanchéité d'au moins une soudure.

20. La méthode conforme à l'une des revendications 34 à 37, consistant à percer un ou plusieurs trous (1016) dans un biseau fermé formé entre les sections correspondantes de tube avec revêtement interne (1003a, 1003b), permettant au fluide d'accéder à la zone testée via un ou plusieurs trous (1016) et/ou permettant d'alimenter en courant électrique une ou plusieurs bobines chauffantes du raccord électrosoudable via un ou plusieurs trous (1016) afin de créer au moins une soudure.
